# EUROPEAN PATENT SPECIFICATION

(11) **EP 3 490 904 B1**
(45) Date of publication and mention of the grant of the patent: **21.10.2020**
(21) Application number: 17751883.4
(22) Date of filing: 26.07.2017
(51) Int. Cl.: B65D 75/26, B65D 75/58

(54) **FLEXIBLE CONTAINER WITH PEEL SLEEVE**
FLEXIBLER BEHÄLTER MIT ABZIEHBARER HÜLLE
RÉCIPIENT FLEXIBLE À ENVELOPPE PELABLE

(30) Priority: 29.07.2016 US 201662368696 P
(43) Date of publication of application: 05.06.2019
(73) Proprietor: Dow Global Technologies LLC, Midland, MI 48674 (US); Rohm and Haas Company, Philadelphia, PA 19106 (US); PBBPolisur S.r.l., Buenos Aires, C1107CPG (AR)
(72) Inventor: MAZZOLA, Micolab, Cardoso, 13214-730 Jundiai SP (BR); GOMES, Jorge, Caminero, 13214-730 Jundial SP (BR); FIGUEYRA, Javier, Hector, Buenos Aires C1107CPG (AR); D'AGOSTO, Silvina, Vanesa, Buenos Aires C1107CPG (AR)
(74) Representative: Boult Wade Tennant LLP
(86) International application number: PCT/US2017/043875
(87) International publication number: WO 2018/022709

(56) References cited:
- EP-A1- 1 428 767
- EP-A2- 0 905 041
- WO-A1-2011/123410
- WO-A1-2016/053241
- WO-A2-02/072347
- WO-A2-2012/115701
- GB-A- 1 503 913
- US-A- 3 114 643
- US-A- 5 691 015
- US-A- 6 066 404
- US-A1- 2007 202 284
- US-A1- 2010 181 370
- US-A1- 2015 131 926
- US-B1- 6 280 085

## Description

### BACKGROUND

A rapidly growing segment of consumers today are "on-the-go," spending more time in transit than ever before. This growing population in today's society is often referred to as "transumers," or consumers who eat/drink while on the move. Transumers seek food options that are pre-portioned, and packaged in flexible containers that are portable, and conveniently enable rapid consumption-consumption which oftentimes occurs away from traditional dining venues such as a table, for example.

To keep pace with the growing trend for packaged food to be consumed "on-the-go," the art recognizes the need for a flexible container that can conveniently deliver food in the space between work and home while simultaneously providing a platform for safe, contaminant-free food consumption while on the move. The art further recognizes the need for a flexible container that can be easily opened while on-the-go and safely consumed with direct mouth-to-container contact.

US 6280085 relates to a flexible package with peel-away covering.

EP 1428767 relates to a packaging bag.

GB 1503913 relates to a package construction.

### SUMMARY

The present container provides a flexible container. In an embodiment, the flexible container includes a first flexible film superimposed on an opposing second flexible film. The first flexible film and the second flexible film are sealed along a common peripheral edge to form an inner container having a closed chamber. The first flexible film and the second flexible film each has an outermost layer comprising an ethylene-based polymer. Each outermost layer is a surface-treated layer having a surface energy from 33 mN/m to 36 mN/m. The flexible container includes a peel sleeve superimposed on each respective outermost layer and along the common peripheral edge. The flexible container includes a release material located between the peel sleeve and each outermost layer along the common peripheral edge. The release material releasably attaches the peel sleeve to the inner container. The release material is a GRAS acrylate-based composition.

### BRIEF DESCRIPTION OF THE DRAWINGS

Figure 1 is a perspective view of a flexible container in accordance with an embodiment of the present disclosure.
Figure 2 is a perspective view of the flexible container of Figure 1 with peel seals releasing from an inner container in accordance with an embodiment of the present disclosure.
Figure 3 is perspective view of the flexible container of Figure 1 and activation of an access member in accordance with an embodiment of the present disclosure.
Figure 4 is an enlarged perspective view of Area 4 of Figure 1 showing a top portion of the flexible container of Figure 1 in accordance with an embodiment of the present disclosure.
Figure 5 is an enlarged perspective view of Area 4 of Figure 1 with a re-seal structure in accordance with an embodiment of the present disclosure.
Figure 6 is an enlarged perspective view of Area 4 of Figure 1 showing a microcapillary strip in accordance with an embodiment of the present disclosure.
Figure 7 is a perspective view of the flexible container of Figure 1 in a pre-consumption scenario in accordance with an embodiment of the present disclosure.
Figure 8 is a perspective view of a consumer enjoying the delivery of a clean, contaminant-free comestible from the flexible container of Figure 7, in accordance with an embodiment of the present disclosure.

### DEFINITIONS AND TEST METHODS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight.

The numerical ranges disclosed herein include all values from, and including, the lower value and the upper value. For ranges containing explicit values (*e.g.*, 1, or 2, or 3 to 5, or 6, or 7) any subrange between any two explicit values is included (*e.g*., 1 to 2; 2 to 6; 5 to 7; 3 to 7; 5 to 6; etc.).

Unless stated to the contrary, implicit from the context, or customary in the art, all parts and percents are based on weight, and all test methods are current as of the filing date of this disclosure.

The term "bond strength" is the amount of force or energy required to separate plies of material or materials plus the force to bend the plies. Ply separation is initially started mechanically by the application of heat or by using a solvent. The separated plies of the test specimen are then placed into the grips of a tensile testing machine. The grips are then separated and the force required to further separate the plies is defined as bond strength. Bond strength is measured in accordance with ASTM F 904, and is reported in Newtons per millimeter, or N/mm.

The term "composition," as used herein, refers to a mixture of materials which comprise the composition, as well as reaction products and decomposition products formed from the materials of the composition.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Density is measured in accordance with ASTM D 792 with results reported in grams (g) per cubic centimeter (cc), or g/cc.

An "ethylene-based polymer," as used herein is a polymer that contains more than 50 mole percent polymerized ethylene monomer (based on the total amount of polymerizable monomers) and, optionally, may contain at least one comonomer.

Melt flow rate (MFR) is measured in accordance with ASTM D 1238, Condition 280°C/2.16 kg (g/10 minutes).

Melt index (MI) is measured in accordance with ASTM D 1238, Condition 190°C/2.16 kg (g/10 minutes).

Tm or "melting point" as used herein (also referred to as a melting peak in reference to the shape of the plotted DSC curve) is typically measured by the DSC (Differential Scanning Calorimetry) technique for measuring the melting points or peaks of polyolefins as described in USP 5,783,638. It should be noted that many blends comprising two or more polyolefins will have more than one melting point or peak, many individual polyolefins will comprise only one melting point or peak.

An "olefin-based polymer," as used herein is a polymer that contains more than 50 mole percent polymerized olefin monomer (based on total amount of polymerizable monomers), and optionally, may contain at least one comonomer. Nonlimiting examples of olefin-based polymer include ethylene-based polymer and propylene-based polymer.

A "polymer" is a compound prepared by polymerizing monomers, whether of the same or a different type, that in polymerized form provide the multiple and/or repeating "units" or "mer units" that make up a polymer. The generic term polymer thus embraces the term homopolymer, usually employed to refer to polymers prepared from only one type of monomer, and the term copolymer, usually employed to refer to polymers prepared from at least two types of monomers. It also embraces all forms of copolymer, *e.g.,* random, block, etc. The terms "ethylene/α-olefin polymer" and "propylene/α-olefin polymer" are indicative of copolymer as described above prepared from polymerizing ethylene or propylene respectively and one or more additional, polymerizable α-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to has being based on "units" that are the polymerized form of a corresponding monomer.

A "propylene-based polymer" is a polymer that contains more than 50 mole percent polymerized propylene monomer (based on the total amount of polymerizable monomers) and, optionally, may contain at least one comonomer.

The term "surface energy" is the sum of all intermolecular forces that are on the surface of a material, the degree of attraction or repulsion force of a material surface exerts on another material. Surface energy is measured in accordance with ASTM D 2578 and is reported in milli-Newtons/meter, or mN/m.

### DETAILED DESCRIPTION

The present disclosure is directed to a flexible container. In an embodiment, the flexible container includes a first flexible film superimposed on an opposing second flexible film. The first flexible film and the second flexible film are sealed along a common peripheral edge to form an inner container having a closed chamber. The first flexible film and the second flexible film each has an outermost layer composed of an ethylene-based polymer. Each outermost layer is a surface-treated layer having a surface energy from 33 mN/m to 36 mN/m. The flexible container includes a peel sleeve superimposed on each respective outermost layer and along the common peripheral edge. The flexible container includes a release material located between the peel sleeve and each outermost layer along the common peripheral edge. The release material releasably attaches the peel sleeve to the inner container. The release material is a GRAS acrylate-based composition.

### 1. Flexible films

The present flexible container includes a first flexible film superimposed on an opposing second flexible film so as to define a common peripheral edge. The first flexible film and the second flexible film may be separate and discrete films with respect to each other. Alternatively, the first flexible film and the second flexible film each may be a component (*i.e.,* panels) of a single unitary film that is folded over along one of the sides of the flexible container, such as a fold-over bottom pouch, for example. A "fold-over bottom pouch" is a flexible pouch made from a single flexible film with seals on three sides and the single flexible film is folded over on the bottom.

The present flexible container includes a first flexible film and a second flexible film. Each film is flexible and has from one, or two to three, or four, or five, or six, or seven, or eight, or nine, or 10 layers. The first flexible film and the second flexible film each is resilient, flexible, deformable, and pliable. The structure and composition for each flexible film may be the same or different. For example, each of two opposing flexible films can be made from a separate web, each web having a unique structure and/or unique composition, finish, or print. Alternatively, each flexible film can be the same structure and the same composition.

In an embodiment, the first flexible film and the second flexible film each is a flexible multilayer film having the same structure and the same composition.

Each flexible multilayer film may be (i) a coextruded multilayer structure, (ii) a laminate, or (iii) a combination of (i) and (ii). In an embodiment, each flexible multilayer film has at least three layers: a seal layer, an outer layer, and a core layer and/or a tie layer between. The tie layer adjoins the seal layer to the outer layer. The flexible multilayer film may include one or more optional inner layers disposed between the seal layer and the outer layer.

In an embodiment, the flexible multilayer film is a coextruded film having at least two, or three, or four, or five, or six, or seven to eight, or nine, or 10, or 11, or more layers. Some methods, for example, used to construct films are by cast co-extrusion or blown co-extrusion methods, adhesive lamination, extrusion lamination, thermal lamination, and coatings such as vapor deposition. Combinations of these methods are also possible. Film layers can comprise, in addition to the polymeric materials, additives such as stabilizers, slip additives, antiblocking additives, process aids, clarifiers, nucleators, pigments or colorants, fillers and reinforcing agents, and the like as commonly used in the packaging industry. It is particularly useful to choose additives and polymeric materials that have suitable organoleptic and or optical properties.

Nonlimiting examples of suitable polymeric materials for the seal layer and/or the core layer and/or the outer layer include olefin-based polymer (including any ethylene/C₃-C₁₀ α-olefin copolymers linear or branched), propylene-based polymer (including plastomer and elastomer, random propylene copolymer, propylene homopolymer, and propylene impact copolymer), ethylene-based polymer (including plastomer and elastomer, high density polyethylene ("HDPE"), low density polyethylene ("LDPE"), linear low density polyethylene ("LLDPE"), medium density polyethylene ("MDPE"), ethylene-acrylic acid or ethylene-methacrylic acid and their ionomers with zinc, sodium, lithium, potassium, magnesium salts, ethylene vinyl acetate copolymers and blends thereof.

Nonlimiting examples of suitable polymeric materials for the tie layer include functionalized ethylene-based polymers such as ethylene-vinyl acetate ("EVA"), polymers with maleic anhydride-grafted to polyolefins such as any polyethylene, ethylene-copolymers, or polypropylene, and ethylene acrylate copolymers such an ethylene methyl acrylate ("EMA"), glycidyl containing ethylene copolymers, propylene and ethylene based olefin block copolymers (OBC) such as INTUNE™ (propylene-based olefin block copolymer) and INFUSE™ (olefin block copolymer) both available from The Dow Chemical Company, and blends thereof.

The flexible multilayer film may include additional layers which may contribute to the structural integrity or provide specific properties. The additional layers may be added by direct means or by using appropriate tie layers to the adjacent polymer layers. Polymers which may provide additional mechanical/optical performance such as stiffness or opacity, as well polymers which may offer gas barrier properties or chemical resistance can be added to the structure.

Nonlimiting examples of suitable material for the optional barrier layer include copolymers of vinylidene chloride and methyl acrylate, methyl methacrylate or vinyl chloride (e.g., SARAN™ resins available from The Dow Chemical Company); vinylethylene vinyl alcohol (EVOH), metal foil (such as aluminum foil). Alternatively, modified polymeric films such as vapor deposited aluminum or silicon oxide on such films as BON, OPET, or OPP, can be used to obtain barrier properties when used in laminate multilayer film.

In an embodiment, the flexible multilayer film includes a seal layer selected from LLDPE (sold under the trade name DOWLEX™ (The Dow Chemical Company)), single-site LLDPE (substantially linear, or linear, olefin polymers, including polymers sold under the trade name AFFINITY™ or ELITE™ (The Dow Chemical Company) for example, ethylene vinyl acetate (EVA), ethylene ethyl acrylate (EEA), propylene-based plastomers or elastomers such as VERSIFY™ (The Dow Chemical Company), grafted olefin-based polymer (MAH-grafted), and blends thereof. An optional tie layer is selected from either olefin block copolymer (sold as INFUSE™) or propylene-based olefin block copolymer (INTUNE™). The outer layer includes greater than 50 wt% of resin(s) having a melting point, Tm, that is from 25°C to 30°C, or 40°C or higher than the melting point of the polymer in the seal layer wherein the outer layer polymer is selected from resins such as AFFINITY™, LLDPE (DOWLEX™), VERSIFY™ or VISTAMAX, ELITE™, MDPE, HDPE or a propylene-based polymer such as propylene homopolymer, propylene impact copolymer or TPO.

In an embodiment, the flexible multilayer film is co-extruded.

In an embodiment, the flexible multilayer film includes a seal layer selected from LLDPE (sold under the trade name DOWLEX™ (The Dow Chemical Company)); single-site LLDPE (substantially linear, or linear, olefin polymers, for example; propylene-based plastomers or elastomers such as VERSIFY™ (The Dow Chemical Company), grafted olefin-based polymer (MAH-grafted), and blends thereof.

In an embodiment, the first flexible film and the second flexible film each is a multilayer film having three layers. Each of the layers is a blend of an LLDPE and an LDPE. Each layer includes from 60 wt%, or 70 wt% to 80 wt% of LLDPE and a reciprocal amount of LDPE, from 40 wt%, or 30 wt% to 20 wt% LDPE (based on total weight of each respective layer). In a further embodiment, each layer consists of LLDPE and LDPE in the aforementioned weight percentages.

The first flexible film and also second flexible film each consist of LLDPE and LDPE, for example. In a further embodiment, the first flexible film and the second flexible film each consists of (is composed solely of) one or more ethylene-based polymer(s). The first flexible film and the second flexible film each consists of LLDPE and LDPE, for example.

### 2. Inner container

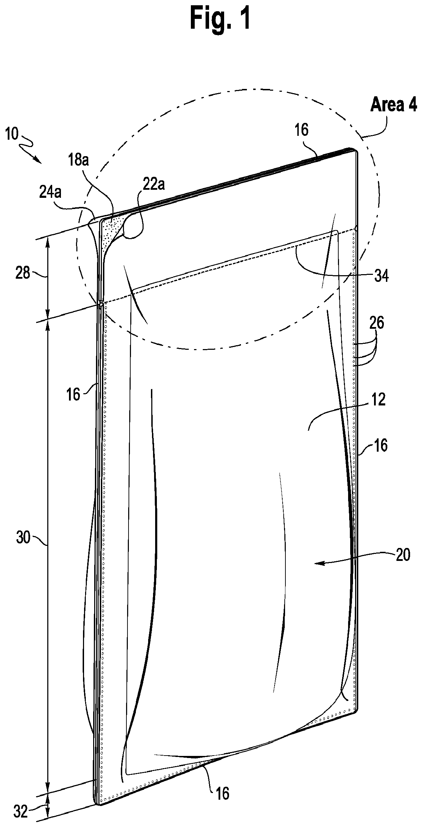

In an embodiment, Figures 1-3 show flexible container 10 having a first flexible film 12 and a second flexible film 14. The first flexible film 12 and the second flexible film 14 are separate and discrete films with respect to each other. Film 12,14 each is a flexible multilayer film. The first flexible film 12 and the second flexible film 14 are superimposed on each other to form, or otherwise define, a common peripheral edge 16. A heat seal 18 seals the first flexible film 12 to the second flexible film 14 along all of, or substantially all of, a common peripheral edge 16.

In a further embodiment, the first flexible film 12 and the second flexible film 14 each is a three layer film composed solely of ethylene-based polymer, each layer consisting of 70 wt% LLDPE and 30 wt% LDPE.

In an embodiment, the heat seal 18 is a hermetic seal.

The heat seal 18 extends along at least of portion of the common peripheral edge 16 to form a chamber 20. The chamber 20 is a sealed hermetic enclosure for holding contents as will be discussed in detail below. In an embodiment, the heat seal 18 extends along all, or substantially all, of the common peripheral edge 16, to form a closed chamber 20 as shown in Figures 1-3.

### 3. Surface treated layer

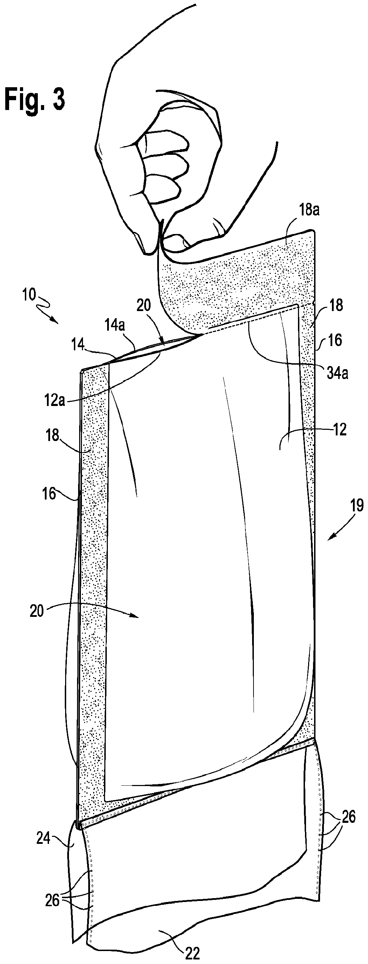

As best shown in Figure 3, the first flexible film 12 and the second flexible film 14 each has a respective outermost layer 12a, 14a. Each outermost layer 12a, 14a includes one or more ethylene-based polymer(s). Each outermost layer 12a, 14a is a surface-treated layer. A "surface treated layer," as used herein, is a film surface that has been subjected to a procedure which raises, or otherwise increases, the surface energy of the film surface. In other words, the surface treated film layer has a greater surface energy than the film surface has in its nascent state. Nonlimiting procedures to produce a surface-treated layer include reactive surface modification including but not limiting to corona treatment, flame treatment, plasma treatment, heat treatment, pressure treatment, and combinations thereof.

Polyethylene, for example, has a surface energy of about 31 mN/m in its nascent state. Each surface-treated layer 12a, 14a is composed of an ethylene-based polymer having a surface energy from 33 mN/m, or 34 mN/m to 35 mN/m, or 36 mN/m. In an embodiment, each surface-treated layer 12a, 14a has a surface energy from 34 mN/m to 35 mN/m.

### 4. Peel sleeve

The present flexible container includes one or more peel sleeves. The peel sleeve(s) is/are superimposed on each respective outermost layer and along the common peripheral edge. Along with the first flexible film and the second flexible film, the peel sleeve(s) further define the common peripheral edge. The peel sleeve can be a single peel sleeve. In this embodiment, a single film serves as the peel sleeve, the single film having a fold-over bottom at the bottom portion of the flexible container.

In an embodiment, the flexible container 10 includes two peel sleeves, peel sleeve 22 and peel sleeve 24 as shown in figures 1-3. Each peel sleeve opposes a respective flexible film. The peel sleeve 22 opposes flexible film 12 and the peel sleeve 24 opposes the flexible film 14. Each peel sleeve is superimposed on a respective surface treated layer (peel sleeve 22 superimposed on surface-treated layer 12a, peel sleeve 24 superimposed on surface-treated layer 14a). Each peel sleeve is sized/shaped and/or dimensioned to be the same size, or substantially the same size, as the respective flexible film, such that the peel sleeves 22,24 further define the common peripheral edge 16.

Each peel sleeve 22,24 is a flexible film and may be a monolayer film or a multilayer film. The material for each peel sleeve 22, 24 may be the same or different. Nonlimiting examples of suitable materials for the peel sleeves 22,24 include metal foil and polymeric material such as polyethylene terephthalate (PET), biaxially oriented polyethylene terephthalate (OPET), monoaxially oriented nylon (MON), biaxially oriented nylon (BON), and biaxially oriented polypropylene (BOPP). Other polymeric materials useful in constructing the peel sleeves are polypropylenes (such as propylene homopolymer, random propylene copolymer, propylene impact copolymer, thermoplastic polypropylene (TPO) and the like, propylene-based plastomers (e.g., VERSIFY™ or VISTAMAX™)), polyamides (such as Nylon 6, Nylon 6,6, Nylon 6,66, Nylon 6,12, Nylon 12 etc.), polyethylene norbornene, cyclic olefin copolymers, polyacrylonitrile, polyesters, copolyesters (such as PETG), cellulose esters, polyethylene and copolymers of ethylene (e.g., LLDPE based on ethylene octene copolymer such as DOWLEX™, blends thereof, and multilayer combinations thereof.

In an embodiment, peel sleeves 22,24 each is a monolayer film made of the same PET.

In an embodiment, peel sleeves 22, 24 each is a monolayer film made of the same BOPP.

### 5. Release material

The present flexible container 10 includes a release material 26 as shown in Figures 1-3. The release material 26 is located, or otherwise is sandwiched between, each peel sleeve 22, 24 and its respective surface-treated layer of the inner container 12a, 14a. The release material 26 extends along a portion of the common peripheral edge 16 as shown in Figure 1.

The release material 26 is a water-based adhesive composition that is generally recognized as safe (GRAS) by a regulatory body, such as the US Food and Drug Administration, for example. In an embodiment, the release material 26 is a water-based and an acrylate-based food grade adhesive that is GRAS. The present release material is a water-based composition and excludes solvent based adhesive compositions which (i) tend to generate a non-peelable bond strength, (ii) produce an odor, (iii) impart health concerns due to the presence of residual aromatics and other harmful solvent residue, and (iv) any combination of (i), (ii), and (iii). Nonlimiting examples of suitable compositions for release material 26 include acrylic water-based adhesives based on butyl acrylate.

In an embodiment, the release material is a formaldehyde-free butyl acrylate adhesive, such as Robond PS-90, available from The Dow Chemical Company.

Figure 1 shows the flexible container 10 with a top portion 28, side portion 30, and bottom portion 32. Figures 1-3 show the release material 26 intermittently spaced along the peripheral edge 16 at the side portion 30 and the bottom portion 32. In other words, the release material 26 is discontinuously disposed at the side portion 30 and the bottom portion 32 of the flexible container and along the common peripheral edge 16 in a spaced-apart manner. The release material 26 may be applied by way of spot lamination (also known as dot lamination) vis-à-vis a rotogravure technique.

The release material 26 releasably attaches each peel sleeve 22, 24 to its respective surface-treated layer 12a, 14a. In an embodiment, the release material 26 adheres the peel sleeve to the its respective surface-treated layer with a bond strength from 0.00656 N/mm (17 gf/in) to 0.00386 N/mm (100 gf/in).

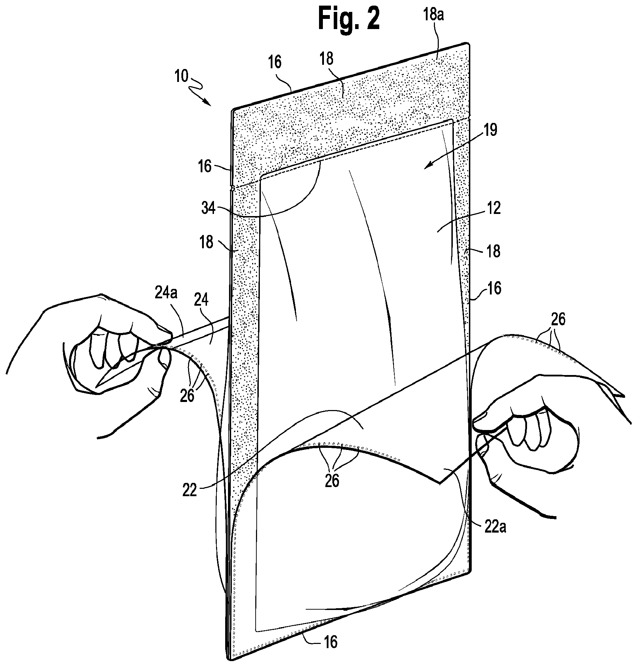

Figures 1-2 show each peel sleeve 22, 24 has a respective tab 22a, 24a at the top portion 28 of the flexible container 10. Each tab 22a, 24a is free of, or otherwise is void of, the release material 26 as best seen in Figure 2. Similarly, a top seal 18a is also free of, or otherwise is void of, release material 26. In the absence of the release material 26, tabs 22a, 24a do not adhere to the top heat seal 18a. The tabs 22a, 24a flank, or otherwise sandwich, opposing sides of the top heat seal 18a without adhering to the top heat seal 18a. In this way, tabs 22a, 24a provide a free edge for a person to grasp the peel sleeve and initiate release of the peel sleeves from the inner container 19 as shown in Figure 2.

Figure 2 shows release of the peel seals 22, 24 from respective outermost layers 12a, 14a. A person grips the tabs 22a, 24a and pulls each tab in a downward direction. The peel sleeves 22, 24 separate and release from respective outermost layers (surface-treated layers 12a, 14a) and expose the top heat seal 18a and an access member 34.

The release material 26 remains on the peel sleeves 22, 24 with no release material 26 on the surface-treated layers 12a, 14a after release. In other words, the release material 26 remains on the peel sleeves 22, 24 while being wholly absent, or substantially wholly absent, from the surface-treated layers 12a, 14a after release of the peel sleeves from the inner container.

The access member 34 is a structure that enables access to into the interior of the chamber 20. The access member extends across a bottom portion of the top heat seal 18a. In other words, actuation of the access member opens the sealed chamber 20 and enables access to the contents stored in the chamber 20. The term "actuate," "actuated," and like terms is the act of manipulating the access member to obtain ingress and egress to and from chamber 20. Actuation includes such nonlimiting acts as pulling, tearing, peeling, separating, folding (and any combination thereof), the access member 34 to open the chamber 20. Nonlimiting examples of suitable access members include a tear notch, a tear slit, a perforation, a line of weakness, a cut line, and combinations thereof.

Figure 3 shows an embodiment wherein the access member is a perforation 34a. Actuation of the perforation 34a, namely, a pulling force across the perforation 34a opens the chamber 20 and exposes the contents therein.

In an embodiment, the flexible container 10 includes an accessory structure located below the access member. Nonlimiting examples of suitable accessory structure include a re-seal structure such as a pressure seal, a pressure zipper, and/or a slide zipper; a microcapillary strip; and any combination thereof.

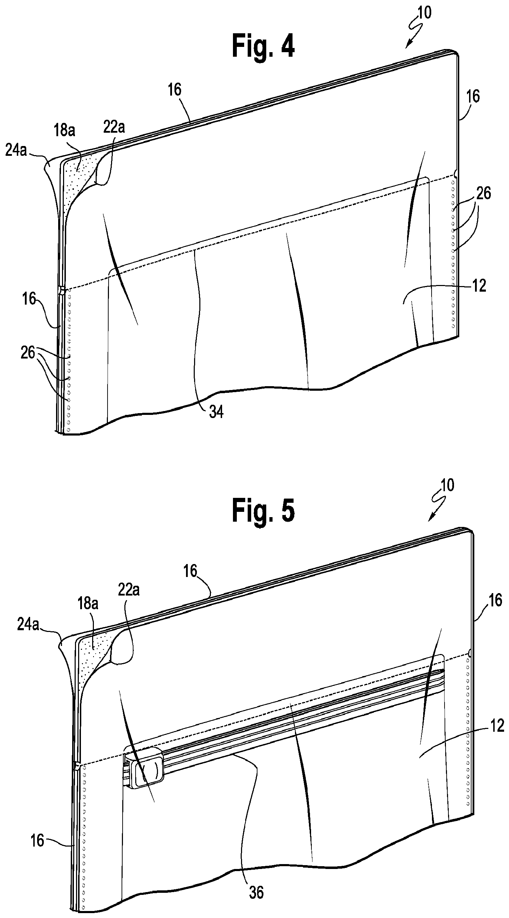

In an embodiment, the flexible container 10 includes a re-seal structure that is a slide zipper 36 as shown in Figure 5.

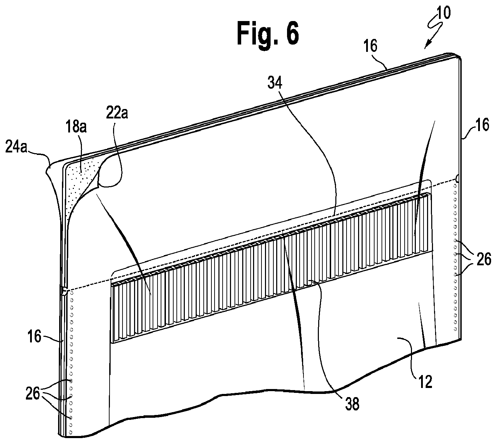

In an embodiment, the flexible container 10 includes an accessory structure that is a microcapillary strip 38, as shown in Figure 6.

In an embodiment, the present flexible container 10 is void of a rigid spout and/or rigid fitment.

In an embodiment, the flexible container 10 has a volume from 0.01 liters (L), or 0.05L, or 0.1L, or 0.25L, or 0.5L, or 0.75L, or 1.0L, or 1.5L, or 2.5L to 3L, or 3.5L, or 4.0L, or 4.5L, or 5.0L.

The present flexible container is suitable for storage of flowable substances including, but not limited to, liquid comestibles and flowable solid particulate comestibles. Nonlimiting examples of suitable liquid comestibles include beverages, yogurt, condiments (ketchup, mustard, mayonnaise), butter, sauces, and baby food. Nonlimiting examples of suitable solid particulate comestibles include powders, grains, cereal, nuts, candy pieces, granular solids, animal feed, and pet food.

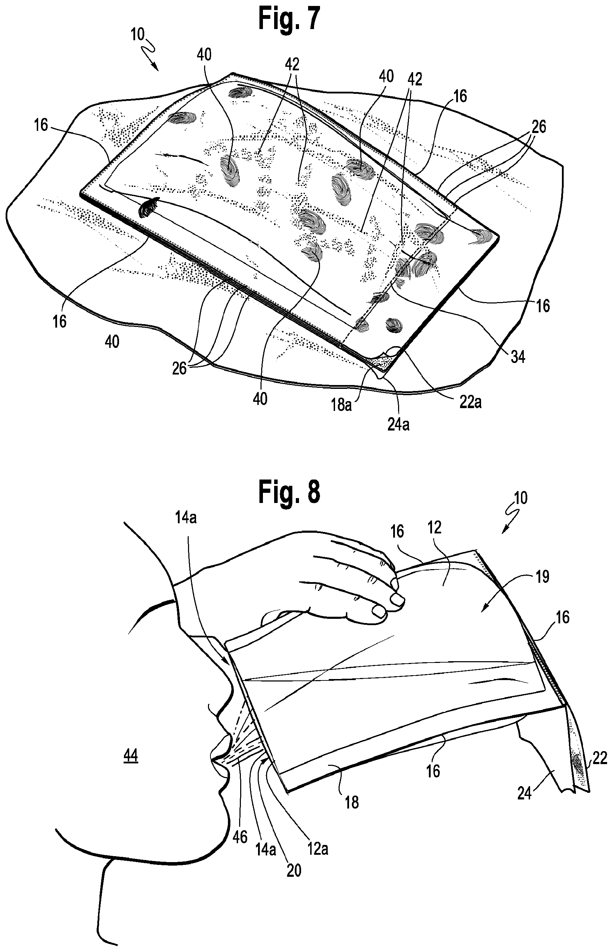

Figure 7 shows the flexible container 10 in a typical pre-consumption scenario. Portable "on-the-go" packaging such as flexible container 10 typically experiences handling, shipping, droppage, and/or other events whereby dirt 40, contaminants 42, or other foreign matter accumulate on the outermost surface of the peel sleeves 22, 24. Figure 8 shows that a consumer 44 can readily peel the peel sleeves 22, 24 away (vis-à-vis tabs 22a, 24a) in order to expose a clean, contaminant-free inner container 19. The consumer 44 actuates the access member 34, removing and separating the top heat seal 18a from the flexible container and opening the chamber 20. The inner container 19 is dirt-free. The open chamber is dirt-free. The present flexible container 10 thereby provides a convenient, safe, clean delivery platform for a comestible, such as beverage 46 stored in the chamber 20. Releasing the peel sleeves 22, 24 from the outermost layers 12a, 14a concomitantly peels the dirt away from the inner container 19 and chamber 20, enabling the consumer 44 to place her lips and/or mouth directly on the clean and dirt-free first and second flexible films of the inner container 19 at the chamber opening, or in very close proximity thereto, for safe consumption of the beverage 46, without fear or risk of contamination.

Applicant discovered that (i) provision of an inner container with a surface-treated outermost layer(s) having a surface energy of 33-36 mN/m in conjunction with (ii) the release material that is a water-based acrylate work synergistically to ensure that all, or substantially all the release material 26 remains adhered to the peel sleeves 22, 24, after the peel sleeves 22, 24 are released, or otherwise separated, from the inner container 20 and as shown in Figures 2, 3, and 8. These two features, working in conjunction, ensure that the inner container 19, the access member 34, and the open chamber, are free, or substantially free, of contaminants, when the comestible stored in the chamber 20 is consumed by a person, or a transumer, for example. In this way, the present flexible container provides a convenient food container appealing to transumers for ready delivery of a comestible on-the go. The present flexible container concomitantly provides a safe, on-the-go food delivery system for clean, direct mouth-to-container contact (mouth directly touching inner container 19 with peel sleeves pulled away).

By way of example, and not limitation, examples of the present disclosure are provided.

### EXAMPLES

### 1. Materials

Materials used in the examples and in the comparative samples are provided in Table 1 below.

**Table 1**

| Component | Description | Composition and properties | Source |
|---|---|---|---|
| Flexible film (Film 1) | Three layer coextruded multilayer film, total film thickness, 60 microns | Each layer is a blend of 70 wt% Dowlex™ NG 2045NB and 30 wt% LDPE Dowlex™ NG 2045NB: density 0.920 g/cc, melt index (190 °C, 2.16kg) 1 g/10 min LDPE 1321: density 0.921 g/cc, melt index (190 °C, 2.16kg) 0.25 g/10 min Final film: density 0.9203 g/cc, melt index (190 °C, 2.16kg) 0.66 g/10 min | The Dow Chemical Company |
| Peel sleeve | Monolayer film, total thickness, 17 microns | polyethylene terephthalate | Terphane Design |
| Release material | Robond L90D | Acrylic water-based adhesive based on butyl acrylate. Solids 41.5%, Viscosity <50cPs, Density 1.06 kg/l | The Dow Chemical Company |
| Release material | Robond PS-90 FDA approved for direct contact with people | Acrylic water-based adhesive based on butyl acrylate. Solids 57%, Viscosity 200cPs, Density 1.06 kg/l | The Dow Chemical Company |
| Release material | Adcote 548/F | Polyurethane solvent-based adhesive Solids 66%, Viscosity 4500mPas, Density 1.06 g/cc | The Dow Chemical Company |
| Release material | Mor Free 152/C79 | Polyurethane solvent-less adhesive Solids 100%, Viscosity 555 Ms, Density 0.99 g/cc | The Dow Chemical Company |

### 2. Peel sleeve fabrication

Different samples are made using Film 1. For each sample, one layer of Film 1 is corona treated to various surface energies during extrusion. Various amounts/types of release material are spot laminated at various coating weights along the peripheral edge of Film 1. The release material is applied via rotogravure on specific areas in a way that the package has an area on the top where no release material is present. The peel sleeve is then placed on the surface treated layer of Film 1 and the release material. The area void of release material serves as a tab by which the consumer can remove the peel sleeve of the packaging. In other words, the peel sleeve includes a tab corresponding to the area where release material is omitted on Film 1.

Packaging prototypes (peel sleeve/release material/Film 1 structures) are produced and tested manually to determine peel-ability of the peel sleeve and analyzed for delamination and whether release material remains. Robond PS-90 is used in order to test a release material that is FDA approved for direct contact with consumers. The results are presented in Table 2 below.

**Table 2**

| Sample | Release material | Adhesive Weight (g/m²) | Film 1 Surface Treatment (mN/m) ASTM D2578 | Film1 - to peel sleeve Laminate bond strength after 72 hrs (gf/in) ASTM F904 | Peel performance | Surface composition after delamination analyzed by FTIR | |
|---|---|---|---|---|---|---|---|
| | | | | | | Film 1 side | Peel sleeve side |
| CS1 | Robond L90D | 1.6 | Less than 33 (no treatment) | 0 | Not easy-peel | Polyethylene | Ethyl Acrylate Adhesive |
| CS2 | Robond L90D | 2 | Less than 33 (no treatment) | 0 | Not easy-peel | Polyethylene | Ethyl Acrylate Adhesive |
| CS3 | Robond L90D | 2.5 | Less than 33 (no treatment) | 0 | Not easy-peel | Polyethylene | Ethyl Acrylate Adhesive |
| IE1 | Robond L90D | 1.6 | 34 | 17 | Easy peel performance | Polyethylene | Ethyl Acrylate Adhesive |
| IE2 | Robond L90D | 2 | 34 | 57 | Easy peel performance | Polyethylene | Ethyl Acrylate Adhesive |
| IE3 | Robond L90D | 2.5 | 34 | 61 | Easy peel performance | Polyethylene | Ethyl Acrylate Adhesive |
| IE4 | Robond PS-90 | 2 | 34 | 100 | Easy peel performance | Polyethylene | Ethyl Acrylate Adhesive |
| CS4 | Robond PS-90 | 2 | 38 | 800 | Not easy-peel | Polyethylene | Ethyl Acrylate Adhesive |
| CS5 | Robond L90D | 1.6 | 36 | 114 | Not easy-peel | Ethyl Acrylate Adhesive | PET |
| CS6 | Robond L90D | 2 | 36 | 123 | Not easy-peel | Polyethylene | Ethyl Acrylate Adhesive |
| CS7 | Robond L90D | 2.5 | 36 | 165 | Not easy-peel | Ethyl Acrylate Adhesive | PET |
| CS8 | Robond L90D | 1.6 | 38 | 158 | Not easy-peel | Polyethylene | Ethyl Acrylate Adhesive |
| CS9 | Robond L90D | 2 | 38 | 153 | Not easy-peel | Polyethylene | Ethyl Acrylate Adhesive |
| CS10 | Robond L90D | 2.5 | 38 | 164 | Not easy-peel | Polyethylene | Ethyl Acrylate Adhesive |
| CS11 | Adcote 548/F | 1.8 | 34 | Film destruction | Not easy-peel | | |
| CS12 | Mor free 152/C79 | 1.8 | 34 | Packaging failure | | | |

| | | | | | | | |
|---|---|---|---|---|---|---|---|
| CS = Comparative Sample IE - Inventive Example | | | | | | | |

Applicant discovered that Film 1 surface-treated to 34-35 mN/m delivers a low bond strength between the Film 1-release material interface and achieves easy peel performance. When release occurs, release material remains on the PET side due to its higher polarity (PET has higher surface energy) leaving the Film 1 clean for direct mouth contact by a consumer.

Comparative sample 11 (CS11) demonstrates that solvent-based adhesive (e.g., Adcote 548/E) generates high bond strength which makes the packaging lose its peelable property inhibiting the consumer of opening it manually.

Inventive examples 1,2,3,4 show that prototypes are easy-peel when the first and second flexible films are surface-treated to 34 mN/m, and release material is applied at adhesive weight between 1.6 - 2.5 g/m², reporting a lamination bond strength between 0.00656 N/mm -0.02353 N/mm (17 - 61 gf/in) and no contamination of release material on Film 1 surface when the peel sleeve is pulled away.

Comparative sample 11 (CS11) manufactured using Adcote 548/F (solvent-based adhesive) had bond strength high enough to destroy the films when the delamination test was performed.

Comparative sample 12 (CS12) manufactured with MorFree 152/C79 (solvent-less adhesive) failed during the manufacturing of the package. The one spot lamination was not able to be achieved due to the low viscosity of the adhesive.

It is specifically intended that the present disclosure not be limited to the embodiments and illustrations contained herein, but include modified forms of those embodiments including portions of the embodiments and combinations of elements of different embodiments as come within the scope of the following claims.

## Claims

1. A flexible container (10) comprising:
a first flexible film (12) superimposed on an opposing second flexible film (14), the first flexible film (12) and the second flexible film (14) sealed along a common peripheral edge (16) to form an inner container (19) having a closed chamber (20);
the first flexible film (12) and the second flexible film (14) each having an outermost layer (12a, 14a) comprising an ethylene-based polymer, and each outermost layer (12a, 14a) is a surface-treated layer (12a, 14a) having a surface energy from 33 mN/m to 36 mN/m;
a peel sleeve (22, 24) superimposed on each respective outermost layer (12a, 14a) and along the common peripheral edge (16); and
a release material (26) located between the peel sleeve (22, 24) and each outermost layer (12a, 14a) along the common peripheral edge (16); the release material (26) releasably attaching the peel sleeve (22, 24) to the inner container (19); wherein the release material (26) is a GRAS acrylate-based composition.

2. The flexible container (10) of claim 1 wherein the release material (26) is located in a spaced-apart manner along a portion of the common peripheral edge (16) and between the peel sleeve (22, 24) and each outermost layer (12a, 14a).

3. The flexible container (10) of any of claims 1-2 wherein each peel sleeve (22, 24) comprises a tab (22a, 24a) at a top portion (28) of the flexible container (10), each tab (22a, 24a) free of release material (26).

4. The flexible container (10) of any of claims 1-3 wherein the inner container (19) comprises a top heat seal (18a) at a top portion (28) of the flexible container (10).

5. The flexible container (10) of claim 4 wherein the top heat seal (18a) is sandwiched by the tabs (22a, 24a).

6. The flexible container (10) of any of claims 3-5 wherein the top heat seal (18a) and the tabs (22a, 24a) are free of the release material (26).

7. The flexible container (10) of any of claims 3-6 wherein at least one tab (22a, 24a) has a free edge for grasping and initiating peel sleeve release.

8. The flexible container (10) of any of claims 1-7 wherein the release material (26) adheres to the peel sleeve (22, 24) when the peel sleeve (22, 24) is released from its respective surface-treated layer (12a, 14a).

9. The flexible container (10) of any of claims 1-8 comprising an access member (34) located at a bottom portion of the top heat seal.

10. The flexible container of claim 9 wherein the access member is selected from the group consisting of a tear notch, a tear slit, a perforation, a line of weakness, a cut line, and combinations thereof.

11. The flexible container (10) of claims 9-10 comprising an accessory structure located below the access member (34).

12. The flexible container (10) of claim 11 wherein the accessory structure is selected from the group consisting of a re-seal structure, a microcapillary strip, and combinations thereof, comprising an accessory structure located below the access member (34).

13. The flexible container (10) of any of claims 1-12 wherein each peel sleeve (22, 24) is composed of a material selected from the group consisting of polyethylene terephthalate and biaxially oriented polypropylene.

14. The flexible container (10) of any of claims 1-13 wherein the flexible container (10) is selected from the group consisting of a pouch, a pillow pouch, a stand up pouch, and a fin seal pouch.

15. The flexible container (10) of any of claims 1-14 comprising a comestible in the chamber (20).

## Patentansprüche

1. Ein flexibler Behälter (10), der Folgendes beinhaltet:
eine erste flexible Folie (12), die über einer gegenüberliegenden zweiten flexiblen Folie (14) angeordnet ist, wobei die erste flexible Folie (12) und die zweite flexible Folie (14) entlang einer gemeinsamen peripheren Kante (16) miteinander verschweißt sind, um einen inneren Behälter (19) zu bilden, der eine geschlossene Kammer (20) aufweist;
wobei die erste flexible Folie (12) und die zweite flexible Folie (14) jeweils eine äußerste Schicht (12a, 14a) aufweisen, die ein Polymer auf Ethylenbasis beinhaltet, und wobei jede äußerste Schicht (12a, 14a) eine oberflächenbehandelte Schicht (12a, 14a) ist, die eine Oberflächenenergie von 33 mN/m bis 36 mN/m aufweist;
eine abziehbare Hülle (22, 24), die über jeder jeweiligen äußersten Schicht (12a, 14a) und entlang der gemeinsamen peripheren Kante (16) angeordnet ist; und
ein Ablösematerial (26), das sich entlang der gemeinsamen peripheren Kante (16) zwischen der abziehbaren Hülle (22, 24) und jeder äußersten Schicht (12a, 14a) befindet, wobei das Ablösematerial (26) die abziehbare Hülle (22, 24) lösbar an dem inneren Behälter (19) befestigt, wobei das Ablösematerial (26) eine GRAS-Zusammensetzung (GRAS, Generally Recognised As Safe = allgemein als sicher anerkannt) auf Acrylatbasis ist.

2. Flexibler Behälter (10) gemäß Anspruch 1, wobei sich das Ablösematerial (26) in einer voneinander beabstandeten Weise entlang eines Abschnitts der gemeinsamen peripheren Kante (16) und zwischen der abziehbaren Hülle (22, 24) und jeder äußersten Schicht (12a, 14a) befindet.

3. Flexibler Behälter (10) gemäß einem der Ansprüche 1-2, wobei jede abziehbare Hülle (22, 24) an einem oberen Abschnitt (28) des flexiblen Behälters (10) eine Lasche (22a, 24a) beinhaltet, wobei jede Lasche (22a, 24a) frei von Ablösematerial (26) ist.

4. Flexibler Behälter (10) gemäß einem der Ansprüche 1-3, wobei der innere Behälter (19) an einem oberen Abschnitt (28) des flexiblen Behälters (10) eine obere Heißversiegelung (18a) beinhaltet.

5. Flexibler Behälter (10) gemäß Anspruch 4, wobei die obere Heißversiegelung (18a) von den Laschen (22a, 24a) sandwichartig umschlossen wird.

6. Flexibler Behälter (10) gemäß einem der Ansprüche 3-5, wobei die obere Heißversiegelung (18a) und die Laschen (22a, 24a) frei von dem Ablösematerial (26) sind.

7. Flexibler Behälter (10) gemäß einem der Ansprüche 3-6, wobei mindestens eine Lasche (22a, 24a) eine freie Kante zum Anfassen und Beginnen des Ablösens der abziehbaren Hülle aufweist.

8. Flexibler Behälter (10) gemäß einem der Ansprüche 1-7, wobei das Ablösematerial (26) an der abziehbaren Hülle (22, 24) haftet, wenn die abziehbare Hülle (22, 24) von ihrer jeweiligen oberflächenbehandelten Schicht (12a, 14a) abgelöst wird.

9. Flexibler Behälter (10) gemäß einem der Ansprüche 1-8, der ein Zugangselement (34) beinhaltet, das sich an einem unteren Abschnitt der oberen Heißversiegelung befindet.

10. Flexibler Behälter gemäß Anspruch 9, wobei das Zugangselement aus der Gruppe ausgewählt ist, die aus einer Einreißkerbe, einem Einreißschlitz, einer Perforation, einer Schwächungslinie, einer Schnittlinie und Kombinationen davon besteht.

11. Flexibler Behälter (10) gemäß den Ansprüchen 9-10, der eine Zubehörstruktur beinhaltet, die sich unterhalb des Zugangselements (34) befindet.

12. Flexibler Behälter (10) gemäß Anspruch 11, wobei die Zubehörstruktur aus der Gruppe ausgewählt ist, die aus einer Wiederversiegelungsstruktur, einem mikrokapillaren Streifen und Kombinationen davon besteht, beinhaltend eine Zubehörstruktur, die sich unterhalb des Zugangselements (34) befindet.

13. Flexibler Behälter (10) gemäß einem der Ansprüche 1-12, wobei jede abziehbare Hülle (22, 24) aus einem Material zusammengesetzt ist, das aus der Gruppe ausgewählt ist, die aus Polyethylenterephthalat und biaxial orientiertem Polypropylen besteht.

14. Flexibler Behälter (10) gemäß einem der Ansprüche 1-13, wobei der flexible Behälter (10) aus der Gruppe ausgewählt ist, die aus einem Beutel, einem Kissenbeutel, einem Standbodenbeutel und einem Rippenverschlussbeutel besteht.

15. Flexibler Behälter (10) gemäß einem der Ansprüche 1-14, der ein Nahrungsmittel in der Kammer (20) beinhaltet.

## Revendications

1. Un contenant souple (10) comprenant :
un premier film souple (12) superposé sur un deuxième film souple opposé (14), le premier film souple (12) et le deuxième film souple (14) scellés le long d'un bord périphérique commun (16) pour former un contenant interne (19) ayant une chambre fermée (20) ;
le premier film souple (12) et le deuxième film souple (14) ayant chacun une couche la plus externe (12a, 14a) comprenant un polymère à base d'éthylène, et chaque couche la plus externe (12a, 14a) est une couche traitée en surface (12a, 14a) ayant une énergie de surface allant de 33 mN/m à 36 mN/m ;
un manchon détachable (22, 24) superposé sur chaque couche la plus externe (12a, 14a) respective et le long du bord périphérique commun (16) ; et
un matériau de libération (26) situé entre le manchon détachable (22, 24) et chaque couche la plus externe (12a, 14a) le long du bord périphérique commun (16) ; le matériau de libération (26) attachant de façon libérable le manchon détachable (22, 24) au contenant interne (19) ; le matériau de libération (26) étant une composition à base d'acrylate GRAS.

2. Le contenant souple (10) de la revendication 1 dans lequel le matériau de libération (26) est situé de manière espacée le long d'une portion du bord périphérique commun (16) et entre le manchon détachable (22, 24) et chaque couche la plus externe (12a, 14a).

3. Le contenant souple (10) de n'importe lesquelles des revendications 1 à 2 dans lequel chaque manchon détachable (22, 24) comprend une languette (22a, 24a) au niveau d'une portion de dessus (28) du contenant souple (10), chaque languette (22a, 24a) étant dépourvue de matériau de libération (26).

4. Le contenant souple (10) de n'importe lesquelles des revendications 1 à 3 dans lequel le contenant interne (19) comprend un joint thermique de dessus (18a) au niveau d'une portion de dessus (28) du contenant souple (10).

5. Le contenant souple (10) de la revendication 4 dans lequel le joint thermique de dessus (18a) est pris en sandwich par les languettes (22a, 24a).

6. Le contenant souple (10) de n'importe lesquelles des revendications 3 à 5 dans lequel le joint thermique de dessus (18a) et les languettes (22a, 24a) sont dépourvus du matériau de libération (26).

7. Le contenant souple (10) de n'importe lesquelles des revendications 3 à 6 dans lequel au moins une languette (22a, 24a) a un bord libre pour saisir et déclencher la libération du manchon détachable.

8. Le contenant souple (10) de n'importe lesquelles des revendications 1 à 7 dans lequel le matériau de libération (26) adhère au manchon détachable (22, 24) lorsque le manchon détachable (22, 24) est libéré de sa couche traitée en surface (12a, 14a) respective.

9. Le contenant souple (10) de n'importe lesquelles des revendications 1 à 8 comprenant un élément d'accès (34) situé au niveau d'une portion de dessous du joint thermique de dessus.

10. Le contenant souple de la revendication 9 dans lequel l'élément d'accès est sélectionné dans le groupe constitué d'une encoche de déchirure, d'une fente de déchirure, d'une perforation, d'une ligne de faiblesse, d'une ligne de coupe, et de combinaisons de celles-ci.

11. Le contenant souple (10) des revendications 9 à 10 comprenant une structure accessoire située au-dessous de l'élément d'accès (34).

12. Le contenant souple (10) de la revendication 11 dans lequel la structure accessoire est sélectionnée dans le groupe constitué d'une structure de rescellage, d'une bande microcapillaire, et de combinaisons de celles-ci, comprenant une structure accessoire située au-dessous de l'élément d'accès (34).

13. Le contenant souple (10) de n'importe lesquelles des revendications 1 à 12 dans lequel chaque manchon détachable (22, 24) est composé d'un matériau sélectionné dans le groupe constitué du polyéthylène téréphtalate et du polypropylène à orientation biaxiale.

14. Le contenant souple (10) de n'importe lesquelles des revendications 1 à 13 dans lequel le contenant souple (10) est sélectionné dans le groupe constitué d'un sachet, d'un sachet coussin, d'un sachet à maintient vertical, et d'un sachet à scellage à bords repliés.

15. Le contenant souple (10) de n'importe lesquelles des revendications 1 à 14 comprenant un produit comestible dans la chambre (20).
